# EUROPÄISCHE PATENTANMELDUNG

(11) **EP 1 158 815 A2**
(43) Veröffentlichungstag der Anmeldung: **28.11.2001**
(21) Anmeldenummer: 01104386.6
(22) Anmeldetag: 23.02.2001
(51) Int. Cl.: H04Q 3/00, H04M 3/42

(54) **Verfahren zur Nachwahl bei einer Kommunikation zwischen Telekommunikationsanlagen**

(30) Priorität: 21.03.2000 DE 10013899
(71) Anmelder: Tenovis GmbH & Co. KG, 60362 Frankfurt am Main (DE)
(72) Erfinder: Kayser, Udo, 42285 Wuppertal (DE)
(74) Vertreter: Bohnenberger, Johannes, Dr.

(57) **Zusammenfassung**

Die Erfindung geht aus von einem Verfahren zur Nachwahl bei einer Kommunikation zwischen Telekommunikationsanlagen, das dazu dient, eine Nachwahl über einen Signalisierungskanal zwischen zwei Telekommunikationsanlagen durchzuführen. Als Signalisierungsverfahren wird PSS1 beziehungsweise QSIG verwendet. Als Signalilsierungskanal wird ein D-Kanal verwendet. Vorteile sind eine höhere Verarbeitungsgeschwindigkeit, eine höhere Verfügbarkeit und dass die Nachwahl nicht auf den Layer 3 state ACTIVE beschränkt ist.

## Beschreibung

### Stand der Technik

Die Erfindung geht aus von einem Verfahren zur Nachwahl bei einer Kommunikation zwischen Telekommunikationsanlagen nach der Gattung des unabhängigen Patentanspruchs.

Es ist bereits bekannt, eine Nachwahl bei einer Kommunikation zwischen Telekommunikationsanlagen durchzuführen. Als ein Signalisierungsverfahren zwischen Telekommunikationsanlagen, insbesondere wenn die Telekommunikationsanlagen von verschiedenen Herstellern vorliegen, wird QSIG (Signalisierung am Q-Referenzpunkt) beziehungsweise PSS1 (Private Integrated Signalling System Number 1) eingesetzt. QSIG und PSS1 sind Synonyme. QSIG ist ein Signalisierungsverfahren, das international und für den europäischen Raum standardisiert ist. Die Standardisierung erfolgt auf internationaler Ebene durch ISO/IEC und im europäischen Raum durch die ETSI und ECMA, wobei eine gegenseitige Harmonisierung der Standards angestrebt wird. QSIG beziehungsweise PSS1 definieren ein ISDN (Integrated Services Digital Network) für die Teilnehmer eines privaten Kommunikationsnetzes. Folgende Standards beschreiben die grundlegende Kommunikation bei QSIG, den sogenannten basic call: ETS 300 172 Edition 3, ISO/IEC 11572 Edition 2 und ECMA 143 3^{rd} Edition.

Bei QSIG ist zur Durchführung einer Nachwahl ein Inband-Signalisierungsverfahren bekannt. Die Signalisierungsinformationen werden dabei in dem Nutzkanal übertragen. Unter dem Nutzkanal werden alle in QSIG- bzw. PSS1-Standards genannten Nutzkanäle verstanden. Die Nennung des B-Kanals im folgenden Text erfolgt stellvertretend für alle Nutzkanäle.

Dieses Verfahren zur Nachwahl ist nicht standardisiert. Voraussetzung für das Inband-Signalisierungsverfahren ist, dass der B-Kanal zumindest in Senderichtung von der Ursprungs- zur Endanlage durchgeschaltet ist, um nun die Nachwahl durchzuführen. Dies ist bei QSIG nur im Layer 3 state Active gewährleistet. Die Wahlphase ist hierbei aus Sicht der QSIG-Signalisierung bereits abgeschlossen. Notwendig ist weiterhin ein Multifrequenzverfahren (MFV), das geeignete Sende- und Empfangseinrichtungen verlangt. Bei dem Multifrequenzverfahren, das auch als Tonwahlverfahren bekannt ist, werden die eingewählten Ziffern durch Töne, also Frequenzen, signalisiert.

### Vorteile der Erfindung

Das erfindungsgemäße Verfahren zur Nachwahl bei einer Kommunikation zwischen Telekommunikationsanlagen hat demgegenüber den Vorteil, dass für die Nachwahl allein ein Signalisierungskanal, der D-Kanal, notwendig ist.

Vorteilhafter Weise wird die Steuerung mittels eines Signalisierungskanals von Anwendungen von vermittlungstechnischen Abläufen in entfernten Telekommunikationsanlagen mit weniger Aufwand möglich, da die MFV-Einrichtungen in der sendenden und empfangenden Telekommunikationsanlage für die Nachwahl über QSIG nun nicht mehr notwendig sind.

Darüber hinaus ist es von Vorteil, dass eine digitale Signalisierung im D-Kanal erheblich schneller abläuft.

Es ist weiterhin von Vorteil, dass der B-Kanal damit nicht mehr für die Durchführung der Nachwahl notwendig ist, somit ist das erfindungsgemäße Verfahren auch für reine Signalisierungsverbindungen anwendbar. Solche Verbindungen werden D-Kanal-Verbindungen genannt oder als Call-independent-connection-oriented bezeichnet.

Des weiteren ist es von Vorteil, dass das erfindungsgemäße Verfahren auch vor dem Erreichen des Layer 3 states Active möglich ist. Darüber hinaus ist das Verfahren für alle zu einer Zeit stattfindenden Signalisierungsbeziehungen zwischen Ursprungs- und Zielanlage verfügbar. Es liegt demnach eine 100%ige Verfügbarkeit vor.

Durch die in den abhängigen Ansprüchen aufgeführten Maßnahmen und Weiterbildungen sind vorteilhafte Verbesserungen des im unabhängigen Patentanspruch angegebenen Verfahrens zur Nachwahl bei einer Kommunikation zwischen Telekommunikationsanlagen möglich.

Besonders von Vorteil ist, dass die Nachwahl und die gesamte Abwicklung der Kommunikation allein über den Signalisierungskanal stattfindet. Darüber hinaus sind keine MFV-Sender und MFV-Empfänger für die Nachwahl über QSIG-Leitungen mehr notwendig, so dass das erfindungsgemäße Verfahren für alle QSIG-fähigen Telekommunikationsanlagen verwendbar ist. Zudem ist das erfindungsgemäße Verfahren schneller.

Darüber hinaus ist es von Vorteil, dass als Signalisierungsverfahren PSS1 beziehungsweise QSIG verwendet wird, wodurch ein großes Anwendungsgebiet für das erfindungsgemäße Verfahren vorliegt, da QSIG ein offener Standard ist, der von vielen Herstellern von Telekommunikationsanlagen als Signalisierungsstandard zwischen Telekommunikationsanlagen akzeptiert und von Kunden vorwiegend gewünscht wird.

Es ist weiterhin von Vorteil, dass, wenn die Zielanlage, die Zieltelekommunikationsanlage, die Nachwahl im Signalisierungskanal nicht unterstützt, entweder eine Ablehnungsmeldung, die Reject-APDU, zurückgesandt wird oder die Anfrage einer Nachwahl ignoriert wird oder die Kommunikation abgebrochen, der Ruf also ausgelöst wird. Die entsprechende Reaktion wird mit der Anfrage für die Nachwahl mit einer Meldung mit versandt, so dass die Ursprungsanlage die Reaktion kennt, falls die Zielanlage die Nachwahl nicht unterstützt.

Darüber hinaus ist es von Vorteil, dass, wenn keine Verbindung von der Ursprungsanlage zu der Zielanlage aufgebaut werden kann, die Ursprungsanlage es entweder erneut nach einer vorgegebenen Zeit versucht, die Verbindung aufzubauen, oder es aufgibt, eine Verbindung aufzubauen.

Es ist schließlich von Vorteil, dass durch eine firmenunabhängige formale Beschreibung des Identifiers und der Nachwahlfunktion eine leichte Anpassung der Nachwahlfunktion an die herstellerspezifischen Gegebenheiten einfach möglich ist.

### Zeichnung

Ausführungsbeispiele der Erfindung sind in der Zeichnung dargestellt und werden in der Beschreibung näher erläutert. Figur 1 zeigt das erfindungsgemäße Verfahren zur Nachwahl bei einer Kommunikation zwischen Telekommunikationsanlagen, Figur 2 zeigt eine Softwarestruktur in einer Telekommunikationsanlage, Figur 3 zeigt eine Durchführung einer Nachwahl gemäß des erfindungsgemäßen Verfahrens und Figur 4 zeigt einen erfolglosen Versuch einer Nachwahl.

### Beschreibung

Nachwahl bezeichnet im Allgemeinen die Steuerung eines Gerätes, z. B. ein Anrufbeantworter oder vermittlungstechnische Vorgänge in einer Vermittlungsanlage, wobei die Verbindung zum Rufziel bereits hergestellt ist. Durch die Eingabe von weiteren Ziffern wird die sogenannte Nachwahl dann durchgeführt, wobei die Nachwahl die entsprechende Aktionen in den zu steuernden Geräten auslöst. Die Nachwahl wird demnach durch ein Endgerät durchgeführt, das an eine Telekommunikationsanlage angeschlossen ist, zum Beispiel ein Telefonapparat oder ein Rechner mit einem Modemanschluß. Die Nachwahl kann aber auch direkt an der Telekommunikationsanlage selbst vorgenommen werden, sofern die Telekommunikationsanlage Mittel zur Einwahl aufweist.

Eine Telekommunikationsanlage stellt eine Vorrichtung dar, die Endgeräte oder ein Kommunikationsnetz an ein weiteres Kommunikationsnetz, üblicherweise ISDN, anschließt. Im folgenden beschreibt der Begriff Ursprungsanlage die Telekommunikationsanlage, die eine Nachwahl bei einer anderen Telekommunikationsanlage, der Zielanlage, durchführen möchte.

ISDN (Integrated Services Digital Network) ist eine digitale Vermittlungstechnik, die alle vermittlungstechnischen Dienste (zum Beispiel Sprache, Daten, Video und Fax) in ein digitales Leitungsnetz integriert. ISDN stellt eine Schnittstelle dar, um digitale Dienste unabhängig von Leitungsart oder der Nutzung der Leitungen zu verwenden.

QSIG ist ein Signalisierungsverfahren, das international und für den europäischen Raum standardisiert ist. Die Standardisierung erfolgt auf internationaler Ebene durch ISO/IEC und im europäischen Raum durch die ETSI und ECMA, wobei eine gegenseitige Harmonisierung der Standards angestrebt wird. QSIG ist offen für Hersteller von Telekommunikationsanlagen. Es ermöglicht daher insbesondere die Signalisierung und damit Kommunikation zwischen Telekommunikationsanlagen von verschiedenen Herstellern, sofern diese Telekommunikationsanlagen nach QSIG signalisieren. Im Standard sind die Basisfunktionen der Signalisierung definiert. Zusätzliche Funktionen (im internationalen Sprachgebrauch: Supplementary Services) nutzen zu ihrer Steuerung das standardisierte ROSE (Remote Operation Service Elements)-Konzept. Das ROSE-Konzept definiert also die Umgebung, um zusätzliche Funktionen zu realisieren. Das ROSE-Konzept findet Anwendung bei standardisierten Supplementary Services, es wird aber auch zur Steuerung herstellerspezifischer Supplementary Services eingesetzt. Im Allgemeinen definiert ROSE fünf Aktionen:
RO-Invoke: eine Operation wird durch diese Aktion aufgerufen, d. h. die Operation wird bei der Partnerinstanz, also der gerufenen Telekommunikationsanlage, ausgelöst.
RO-Result: hier wird das positive Ergebnis einer Operation gemeldet, d. h. der Aufruf der Operation ist erfolgreich.
RO-Error: diese Aktion meldet ein negatives Ergebnis einer Operation, d. h. die Operation wurde nicht ausgeführt.
RO-Reject-U: diese Aktion wird durchgeführt, wenn eine Anforderung im Fehlerfall durch den Benutzer des Dienstes abgewiesen wird.
RO-Reject-P: hier wird eine Anforderung im Fehlerfall durch den Erbringer des Dienstes abgewiesen.

Diese ROSE-Aktionen werden auf vier Protokollelemente abgebildet. Solche Protokollelemente werden im englischen als Application Protocol Data Unit (APDU) bezeichnet. Die vier Protokollelemente sind: RO-Invoke, RO-Return-Result, RO-Return-Error, RO-Reject.

Die ROSE Protokollelemente werden mittels des Facility-Information-Element übertragen. Das Facility-Information-Element wird entweder mit Basismeldungen (Meldungen, die einen Verbindungsaufbau und Verbindungsabbau steuern), wie Setup, Alert, Connect oder Disconnect übertragen oder, falls keine Basismeldungen zur Verfügung stehen, mit der dann zu verwendenden Meldung Facility. Mehrere ROSE Protokollelemente können in einem Facility-Information-Element enthalten sein.

Auf das Protokollelement Invoke, das eine Aktion auslösen soll, sind bei QSIG drei Reaktionsmöglichkeiten definiert. Zunächst kann das Protokollelement einfach ignoriert werden, oder die zugrunde liegende Signalisierungsbeziehung wird ausgelöst, oder es wird dem Versender ein Reject-Protollelement versendet, um ihn darauf hinzuweisen, dass die angeforderte Aktion nicht bekannt ist.

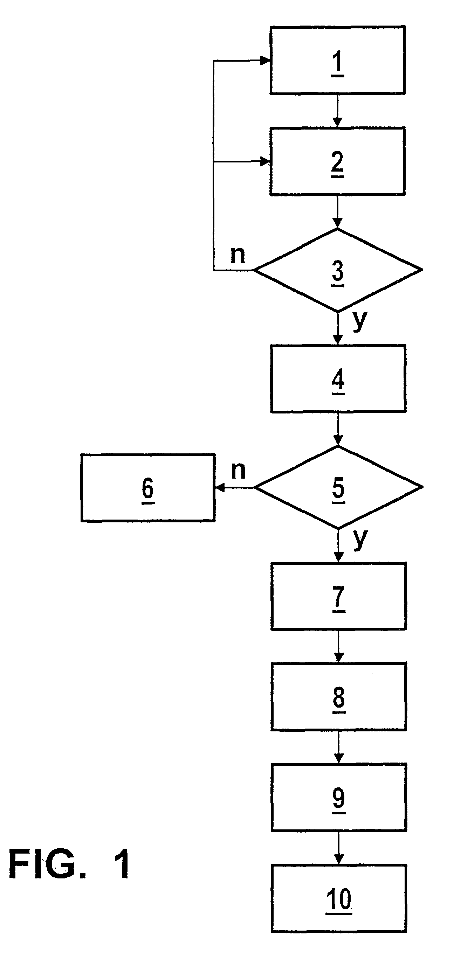

In Figur 1 ist das erfindungsgemäße Verfahren zur Nachwahl bei der Kommunikation zwischen Telekommunikationsanlagen dargestellt. In Verfahrensschritt 1 möchte eine Anwendung, die auf einem Endgerät oder auf einer Telekommunikationsanlage selbst läuft, eine Verbindung herstellen, um mittels einer Nachwahl eine entfernte Telekommunikationsanlage oder ein anderes zu steuerndes Gerät zu steuern.

In Verfahrensschritt 2 wird dann von der Ursprungsanlage eine Verbindung zu der Zielanlage hergestellt. Die Nummer dieser Zielanlage wird von dem Endgerät oder an der Ursprungsanlage selbst eingegeben. Die Verbindung wird gegebenenfalls über vermittelnde Telekommunikationsanlagen, hier mit Transit-Telekommunikationsanlagen bezeichnet, hergestellt. Bei QSIG werden dafür unter anderem die Basismeldungen Alert, Setup und Connect übertragen.

In Verfahrensschritt 3 wird überprüft, ob die Verbindung zu der Zielanlage hergestellt worden ist. Dies ergibt sich aus Meldungen, die die Zielanlage der Ursprungsanlage sendet. Ist das nicht der Fall, dass die Verbindung hergestellt wurde, dann wird einerseits der Anwendung, die den Ruf ausgelöst hat, eine Meldung übermittelt und andererseits der Ursprungsanlage dies übermittelt, so dass die Ursprungsanlage nach einer vorgegebenen Zeit erneut versucht, eine Verbindung herzustellen. Hier kann auch ein Abbruch des Rufs entschieden werden.

Wurde in Verfahrensschritt 3 festgestellt, dass eine Verbindung hergestellt werden konnte, dann wird in Verfahrensschritt 4 der Zielanlage eine Nachwahl signalisiert. Dafür wird mittels der Meldung Facility eine ROSE-APDU versendet, die eine Nachwahl aufruft (Invoke). Mit der Invoke-APDU wird eine Interpretations-APDU mitgesendet, die angibt, wie die Zielanlage zu reagieren hat, wenn die Zielanlage den angeforderten Dienst, hier die Nachwahl, nicht unterstützt. Bei QSIG sind dabei drei Reaktionsmöglichkeiten definiert: Ignorieren der Invoke-APDU, das Auslösen des Rufs oder das Versenden einer Reject-APDU, so dass der Anforderer benachrichtigt wird, dass der angeforderte Dienst von der betreffenden Zielanlage nicht unterstützt wird. Hier wird vorzugsweise die Reject-APDU versendet. Es liegt jedoch in der Entscheidung der steuernden Applikation, auch die Varianten "ignorieren" und "Auslösen des Rufs" zu wählen.

In Verfahrensschritt 5 wird überprüft, ob die Zielanlage eine Nachwahl über einen Signalisierungskanal gestattet oder nicht. Ist das nicht der Fall, dann wird in Verfahrensschritt 6 das Verfahren beendet und der Ursprungsanlage signalisiert, dass sie zu der Zielanlage keine Nachwahlanfragen mehr versenden wird. Es wird also die Reject-APDU versendet. Alternativ sind die beiden oben genannten alternativen Reaktionsmöglichkeiten implementierbar, wobei dann die Interpretations-APDU nur eine dieser beiden alternativen Reaktionsmöglichkeiten anzeigt.

Ist jedoch eine Nachwahl über den Signalisierungskanal, hier der D-Kanal, möglich, dann wird in Verfahrensschritt 7 die Nachwahl über den Signalisierungskanal durchgeführt. In Verfahrensschritt 8 wird gemäß der Nachwahl eine Operation durchgeführt. Entspricht die Nachwahl keiner definierten Operation, dann wird in Verfahrensschritt 8 keine Operation ausgeführt. In Verfahrensschritt 9 wird gegebenenfalls das Ende einer Kommunikation signalisiert, um in Verfahrensschritt 10 dann die Verbindung abzubauen. Dazu wird unter anderem die Basic-Call-Meldung Disconnect verwendet.

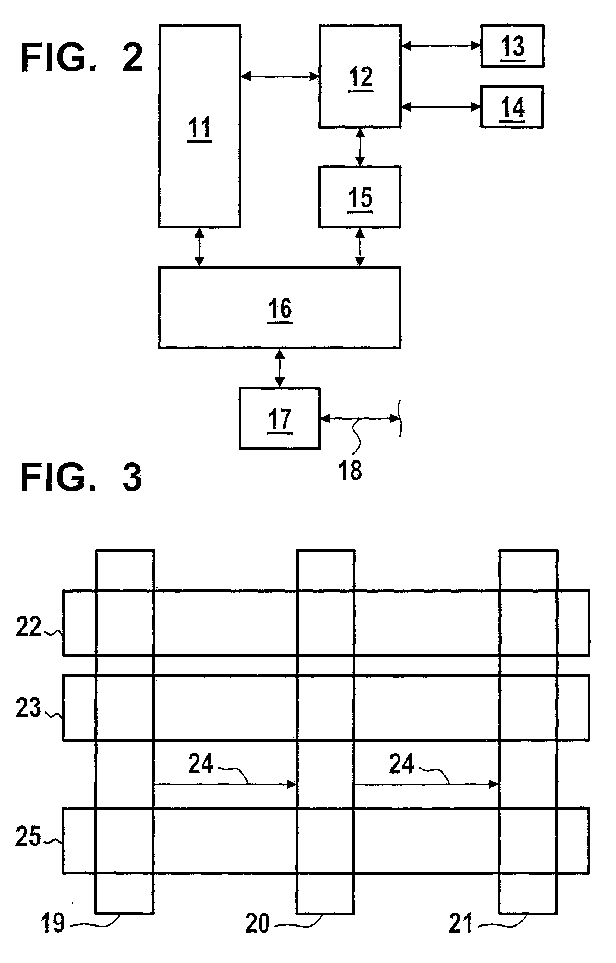

In Figur 2 ist der Aufbau der Software einer Telekommunikationsanlage dargestellt. Die erfindungsgemäße Nachwahlfunktion (SS[Supplementary Service]-Control for Post-Dialling) 13 ist mit einem Koordinationsprozess (Coordination Function) 12 verbunden, über den die Nachwahlfunktion 13 die Dienste von ROSE 14 nutzt. Die Koordinationsfunktion 12 ist weiterhin mit der GFT (Generic Functional Transport Control)-Kontrolle 15 verbunden.

Die GFT-Kontrolle 15 zeigt zwei Arten von Diensten. Zum einen die Transportdienstleistung für Protokollelemente zwischen Funktionen, die auf verschiedenen Telekommunikationsanlagen ablaufen, und zum anderen den Aufbau und den Abbau von Verbindungen ohne Nutzkanalbelegung, das sind Signalisierungsverbindungen. Dazu gehört insbesondere das erfindungsgemäße Verfahren. Die GFT-Kontrolle 15 ist mit einer Protokollkontrolle (Protocol Control) 16 verbunden, die die Übertragung von Protokollelementen zwischen benachbarten Telekommunikationsanlagen leistet und den Aufbau und Abbau von Signalisierungsverbindungen zwischen benachbarten Telekommunikationsanlagen. Auch die Rufkontrolle (Call Control) 11 ist mit der Koordinationsfunktion 12 und der Protokollkontrolle 16 verbunden. Die Protokollkontrolle 16 übergibt beziehungsweise empfängt Daten. Der Signalisierungsmechanismus 17 gibt dann die Meldungen auf die Leitung 18 oder empfängt sie von der Leitung 18.

In Figur 3 ist der Ablauf des erfindungsgemäßen Verfahrens zur Nachwahl schematisch dargestellt. Eine oder mehrere Transit-Telekommunikationsanlagen 20 können an der Verbindung beteiligt sein, falls die Ursprungsanlage 19 und die Zielanlage 21 nicht unmittelbar verbunden sind. Zunächst werden grundlegende Funktionen, also die des sogenannten standard basic call 22 ausgeführt. In Verfahrensschritt 23 erhält die Ursprungsanlage 19 von einem angeschlossenen Endgerät Wahlinformationen. Diese Wahlinformationen werden in Verfahrensschritt 24 mittels der Meldung Facility als Nachwahloperation versendet, wobei die Transit-Telekommunikationsanlage 20 die Meldung Facility zu der Zielanlage 21 unverändert weiter sendet. Die Zielanlage 21 erkennt die Anfrage einer Nachwahl und leitet diese Information an die Rufkontrolle 11 weiter.

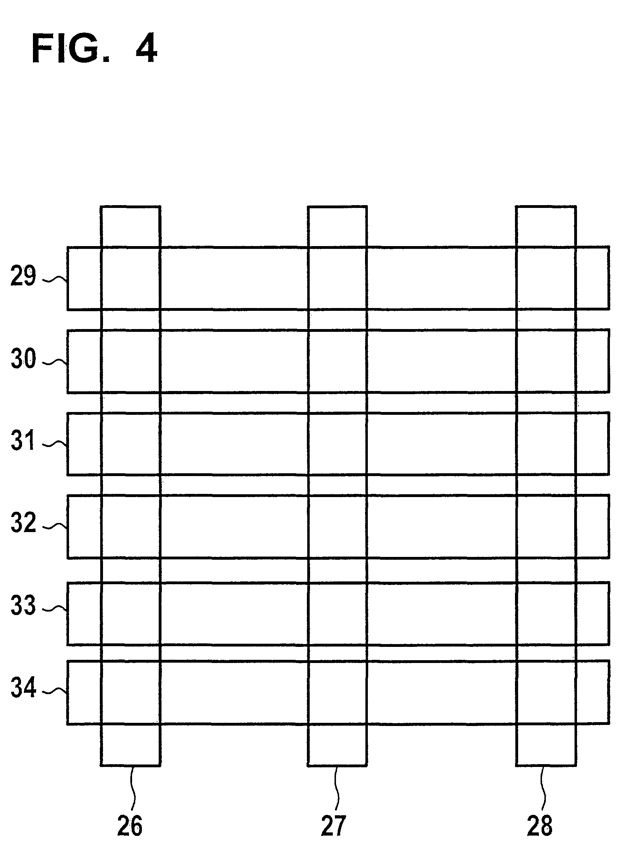

In Figur 4 wird dargestellt, was die Zielanlage unternimmt, wenn sie das Nachwahlverfahren nicht unterstützt. Die Ursprungsanlage 26 bedient sich wieder einer Transit-Telekommunikationsanlage 27, um Daten an eine Zielanlage 28 zu übertragen. In Verfahrensschritt 29 werden wieder Funktionen des standard basic call ausgetauscht. In Verfahrensschritt 30 erhält die Ursprungsanlage 26 von einem angeschlossenen Endgerät Wahlinformationen. In Verfahrensschritt 31 werden dann diese Wahlinformationen zu der Zielanlage 28 weiter versendet. In Verfahrensschritt 32 wird festgestellt, dass die Zielanlage 28 diese Funktion nicht kennt. In Verfahrensschritt 33 wird daher mittels des Informationselements Facility an die Ursprungsanlage 26 die Nachricht geschickt, dass die Anfrage auf eine Nachwahl abgelehnt wird, dabei wird dann die oben erwähnte Reject-APDU verwendet. In Verfahrensschritt 34 erkennt dies die Ursprungsanlage 26 und wird künftige Informationen des eigenen Teilnehmers bezüglich Nachwahl ignorieren.

Transit-Telekommunikationsanlagen sind für die Übertragung nicht notwendig, jedoch zuweilen unvermeidlich, wobei auch mehrere solcher Transit-Telekommunikationsanlagen verwendet werden können.

Hier wird ein Verfahren zur Nachwahl in einem Signalisierungskanal beschrieben. Signalisierungsverfahren beschreiben nicht nur Abläufe, also eine Abfolge von Meldungen, sondern auch deren Inhalte. Die nachfolgende Tabelle 1 beschreibt formal die Inhalte der Signalisierung für die Nachwahl in der QSIG üblichen Form. Mit dieser formalen Beschreibung nach dem Standard ASN.1 ist über die Codierregeln (Basic Encoding Rules) unmittelbar das Binärmuster festgelegt. Die formale Definition legt jedoch nicht nur den Inhalt der Signalisierung fest, sondern auch einen sogenannten Identifier, der diese Signalisierungsinformation innerhalb von QSIG eindeutig kennzeichnet. Der Identifier findet sich in der letzten Zeile beginnend mit Boschpostdialinfo wieder.

In der ersten Zeile der Tabelle 1 wird der Bosch-Object-Identifier eingetragen, der die Operation für die Geräte der jeweiligen Firma signalisiert. Alle Zeilen, die mit Import beginnnen, bedeuten, dass Definitionen aus dem QSIG-Standard übernommen werden. Die Zeile, die mit Export beginnt, bedeutet, dass das hier definierte Datum anderen Anwendungen zur Verfügung gestellt wird. Die Zeile, die mit Boschi33x beginnt, bedeutet, dass der Bosch-Object-Identifier aus Zeile 1 der Tabelle 1 für Anwendungen einer firmenspezifischen Telekommunikationsanlage erweitert wird. Die Zeile, die mit Boschqsig beginnt, bedeutet, dass der Bosch-Object-Identifier für Anwendungen der firmenspezifischen Telekommunikationsanlage um eine Identifikation für firmenspezifische QSIG-Erweiterungen ergänzt wird. Die Zeilen, die mit Postdialinfo beginnen und vor der Zeile beginnend mit BoschPostDialInfo enden, definieren die neue ROSE-Operation Nachwahl.

Die Zeilen, die mit BoschPostDialInfo beginnen und die vor der Zeile beginnend mit Boschpostdialinfo enden, definieren die Signalisierungsdaten. Die Angabe dialdigits definiert die Wahlziffern, und die Angabe sendingcomplete den optionalen Indikator, dass keine weitere Wahlinformation folgen wird. Schließlich gibt die Zeile beginnend mit Boschpostdialinfo den Identifier der Operation wieder, der dann weltweit eindeutig unter dem Bosch-Object-Identifier erkennbar ist. Träger der Information ist das Informationselement Facility, das von der Meldung Facility übertragen wird. Das Facility-Informationselement wird mit der folgenden Kodierung für die Network-Facility-Extension verschickt.
- Source-entity:: EndPINX
- DestinationEntity:: EndPINX

Das Facility-Informationselement wird mit der folgenden Kodierung für die Interpretations-APDU verschickt: RejectAnyUnrecognizedAPDU, ebenfalls zulässig nach Vorgabe der steuernden Applikation: discardAnyUnrecognizedAPDU und clearCallIfAnyInvokePduNotRecognized).

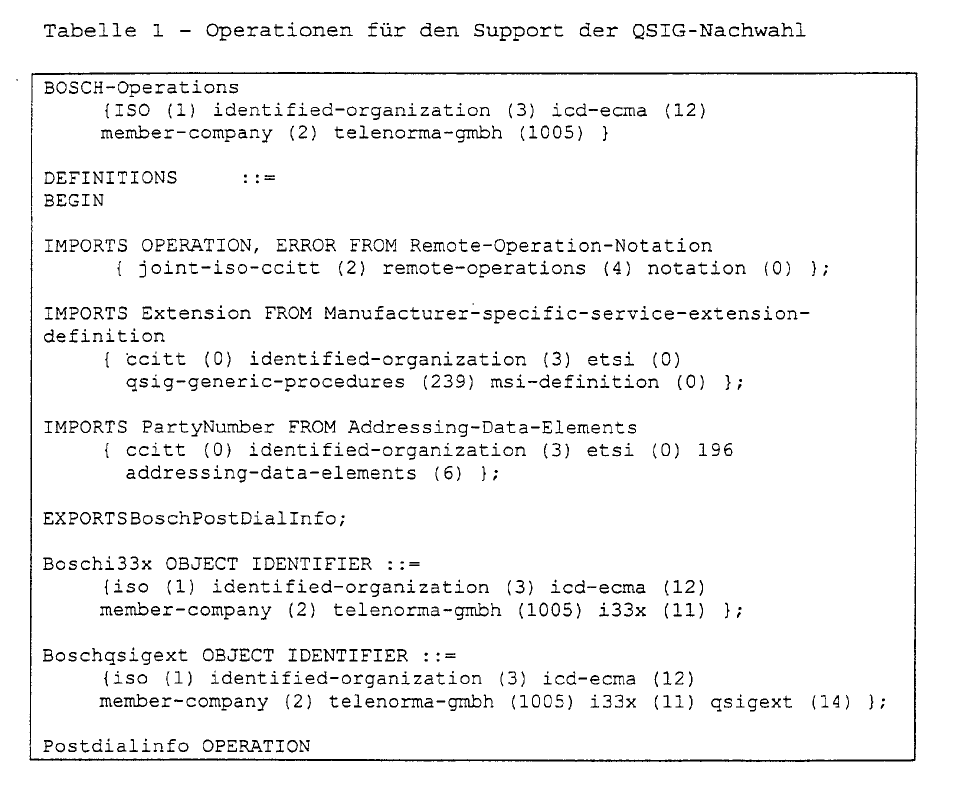

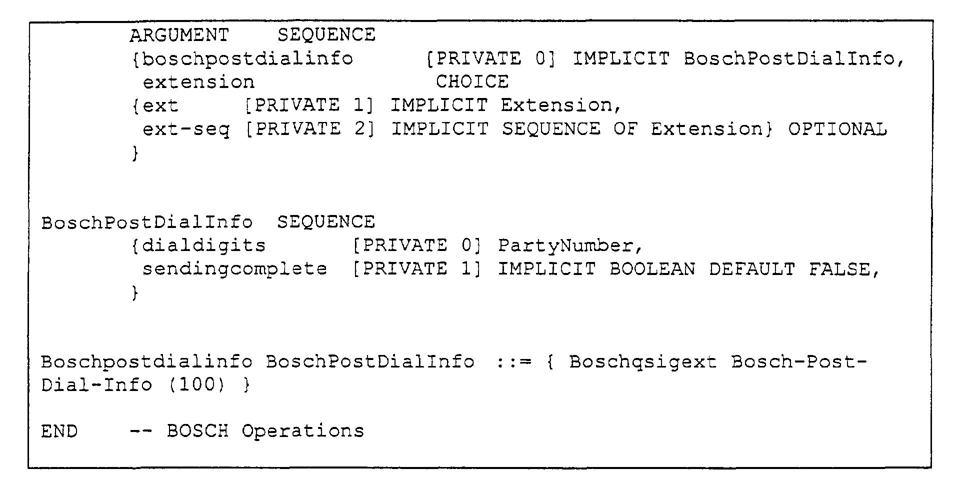

## Patentansprüche

1. Verfahren zur Nachwahl bei einer Kommunikation zwischen Telekommunikationsanlagen, wobei ein Signalisierungsverfahren bei der Kommunikation für gleiche und/oder unterschiedliche Telekommunikationsanlagen verwendet wird, wobei ein Signalisierungskanal verwendet wird, wobei gegebenenfalls der Signalisierungskanal für wenigstens einen Nutzdatenkanal verwendet wird, **dadurch gekennzeichnet, dass** der Signalisierungskanal zur Durchführung der Nachwahl verwendet wird.

2. Verfahren nach Anspruch 1, **dadurch gekennzeichnet, dass** über den Signalisierungskanal eine Verbindung zur Herstellung der Kommunikation aufgebaut wird, dass im Fall einer erfolgreichen Verbindung über den Signalisierungskanal die Nachwahl signalisiert wird, dass im Fall einer durchführbaren Nachwahl die Nachwahl über den Signalisierungskanal durchgeführt wird.

3. Verfahren nach Anspruch 2, **dadurch gekennzeichnet, dass** als Signalisierungsverfahren PSS1/QSIG verwendet wird.

4. Verfahren nach Anspruch 3, **dadurch gekennzeichnet, dass** als der wenigstens eine Nutzdatenkanal wenigstens ein B-Kanal oder wenigstens ein H-Kanal und als der Signalisierungskanal ein D-Kanal verwendet wird.

5. Verfahren nach einem der vorhergehenden Ansprüche, dass, wenn eine Zielanlage die Nachwahl nicht unterstützt, entweder eine Ablehnungsmeldung, eine Reject-APDU, versandt wird oder die Nachwahl ignoriert wird oder die Kommunikation abgebrochen wird.

6. Verfahren nach einem der vorhergehenden Ansprüche, **dadurch gekennzeichnet, dass**, wenn keine Verbindung zu der Zielanlage von der Ursprungsanlage aufgebaut wurde, die Ursprungsanlage nach einer vorgegebenen Zeit erneut versucht, die Verbindung aufzubauen, oder den Verbindungsversuch aufgibt.

7. Verfahren nach einem der vorhergehenden Ansprüche, **dadurch gekennzeichnet, dass** für den Identifier der Nachwahl folgende formale Beschreibung verwendet wird:

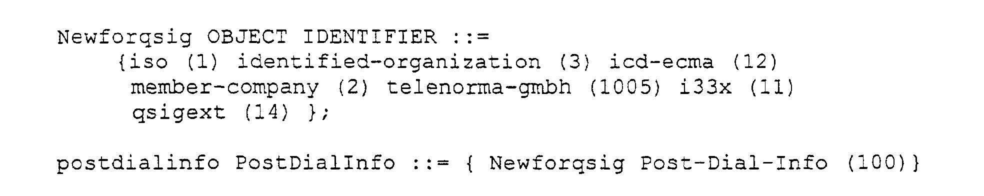

8. Verfahren nach einem der vorhergehenden Ansprüche,
**dadurch gekennzeichnet, dass** für die Signalsierungsdaten der Nachwahl folgende formale Beschreibung verwendet wird:
